# EUROPÄISCHE PATENTSCHRIFT

(11) **EP 0 490 210 B1**
(45) Veröffentlichungstag und Bekanntmachung des Hinweises auf die Patenterteilung: **02.11.1994**
(21) Anmeldenummer: 91120649.8
(22) Anmeldetag: 30.11.1991
(51) Int. Cl.: F28D 1/03, F28F 3/02, B23K 26/00

(54) **Wärmeaustauscher**
Heat exchanger
Echangeur de chaleur

(30) Priorität: 08.12.1990 DE 4039293
(43) Veröffentlichungstag der Anmeldung: 17.06.1992
(73) Patentinhaber: GEA LUFTKÜHLER GmbH, D-44809 Bochum (DE)
(72) Erfinder: Borchert, Werner, Dipl.-Ing., W-4330 Mülheim-Ruhr (DE); Henning von Cleve, Hans, W-4630 Bochum (DE)
(74) Vertreter: Bockermann, Rolf, Dipl.-Ing.

(56) Entgegenhaltungen:
- EP-A- 0 283 937
- DE-A- 3 044 507
- FR-A- 2 317 042
- GB-A- 668 349
- GB-A- 745 936
- GB-A- 2 197 450
- US-A- 3 528 496
- US-A- 3 693 710
- US-A- 3 860 065
- US-A- 4 256 177
- PATENT ABSTRACTS OF JAPAN vol. 7, no. 199 (M-240)(1344) 3. September 1983 & JP-A-58 097 489 (HITACHI SEISAKUSHO KK) 9. Juni 1983
- PATENT ABSTRACTS OF JAPAN vol. 7, no. 283 (M-263)(1428) 16. Dezember 1983 & JP-A-58 159 991 (TOKYO SHIBAURA DENKI KK) 22. September 1983

## Beschreibung

Die Erfindung betrifft einen Wärmeaustauscher gemäß den Merkmalen im Oberbegriff des Patentanspruchs.

Bei dem aus der gattungsprägenden DE-OS 30 44 507 bekannten Wärmetauscher wird hinsichtlich der Verbindung von wellenförmigen Rippenbändern mit den Flanken der Rohre offenbart, daß benachbarte Rohre durch wellenlinienförmige Rippen miteinander verbunden sind, deren Scheitelabschnitte in der üblichen Weise durch Schweißen, Löten, Hartlöten oder dergleichen an den Rohren befestigt sind.

Wenn auf ein "Schweißen in der üblichen Weise" hingewiesen wird, so kann der Fachmann hierunter nur eine solche Befestigungsmethode verstehen, bei der die in Strömungsrichtung des äußeren Tauschermediums liegenden Stirnkanten der Rippenbänder im Bereich der an die Rohrflanken stoßenden Krümmungen mit den Rohrflanken verschweißt sind. Es handelt sich hierbei zwangsläufig um ein punktuelles Verschweißen, da die Scheitelbereiche der Rippenbänder zwischen den Stirnkanten für ein Verschweißen mit den Rohrflanken nicht zugänglich sind. Dazu ist in den V-förmigen Kanälen zwischen den Rippenstegen kein Platz vorhanden, der insbesondere unter dem Gesichtspunkt einer Massenproduktion das Einführen von Schweißelektroden gestatten würde.

Aufgrund dieses Sachverhalts kann kein im wärmetechnischen Sinne befriedigender Kontakt der Rippenbänder mit den Rohrflanken im Bereich zwischen den punktuell mit den Rohrflanken verschweißten Stirnkanten hergestellt werden. Vielmehr ist zu erwarten, daß beim Verzinken der Austauscherrohre und der an diesen punktuell festgelegten Rippenbänder die ausschließlich durch das Zink mögliche wärmeübertragende Verbindung zwischen den Rippenbändern und den Rohrflanken nicht erreicht wird. Damit ist aber der gewünschte Wärmefluß zwischen den Austauscherrohren und den Rippenbändern gestört, ohne daß diese Ursache jedoch sichtbar wäre. Dieser Mangel wird insbesondere dadurch hervorgerufen, daß sich bei dem Eintauchen des Wärmetauschers in ein Zinkbad die Rohrflanken nach innen biegen können und dadurch keine einwandfreie wärmeleitende Verbindung über das Zinklot zwischen den Rippenbändern und den Rohrflanken zustande kommen kann.

Ausgehend vom Stand der Technik liegt der Erfindung die Aufgabe zugrunde, diesen Wärmeaustauscher so zu verbessern, daß bei einfacher Fertigung wellenförmige Rippenbänder unter weitgehender Vermeidung von Biegespannungen und Verwerfungen der Austauscherrohre und der Rippen an die großflächigen Rohrflanken einwandfrei wärmeübertragend geschweißt werden können.

Die Lösung dieser Aufgabe besteht nach der Erfindung in den im kennzeichnenden Teil des Patentanspruchs aufgeführten Merkmalen.

Auf diese Weise wird ein Wärmeaustauscher geschaffen, bei dem die wellenförmigen Rippenbänder zwischen den Austauscherrohren so mit den großflächigen Rohrflanken verschweißt sind, daß sowohl die einzelnen Rippen als auch die Rohrflanken im wesentlichen nur Zugspannungen unterworfen sind, wenn sich in den Austauscherrohren ein Vakuum ausbildet bzw. diese Druckspannungen ausgesetzt sind, wenn in den Austauscherrohren Überdruck herrscht. Dadurch, daß jetzt die Scheitelbereiche der Rippenbänder an mehreren Stellen zwischen den in Strömungsrichtung des äußeren Austauschermediums liegenden endseitigen Stirnkanten mit den Rohrflanken verschweißt sind, können nunmehr extrem breite Rohrflanken von 300 mm und mehr hergestellt werden. Auf diese Weise wird ein hohes Widerstandsmoment (Trägheitsmoment) erreicht und es werden bei schlanken Austauscherrohren zwei große Wärmeaustauscherflächen mit einem geringen Strömungswiderstand erzielt.

Da die Rippenbänder entlang ihrer Scheitelbereiche an mehreren Stellen mit den Rohrflanken verschweißt sind, erlangt ein erfindungsgemäßer Wärmeaustauscher eine solche Steifigkeit, daß es möglich wird, diesen komplett auf einmal zu verzinken. Hierbei ist nicht zu befürchten, daß die Warmstreckgrenzen der eingesetzten Materialien überschritten werden. Die Breite eines Wärmeaustauschers kann problemlos auf die übliche Zinkbadbreite abgestellt werden, da der Wärmeaustauscher aufgrund seiner hervorragenden Steifigkeit keine zusätzlichen Stützkonstruktionen erfordert.

Ferner können beim Verzinken nunmehr sowohl die Rohrböden als auch die ggf. sich daran anschließenden Verteil- und Sammelkammern gleichzeitig mit den Austauscherrohren verzinkt werden. Hierdurch kann der Fertigungsaufwand noch wirtschaftlicher gestaltet werden. Besonders vorteilhaft ist jedoch in diesem Zusammenhang, daß sich die Spalte zwischen den Rohrenden und den an den Querschnitt der Austauscherrohre angepaßten Aussparungen in den Rohrböden infolge Kapillarwirkung komplett mit Zink zusetzen. Dadurch werden auch diese bislang Problemzonen bildenden Stellen eines Wärmeaustauschers in befriedigender Weise umgestaltet.

Die mehrfache Verbindung der Rippenbänder entlang ihrer Scheitelbereiche mit den Rohrflanken basiert darauf, daß die Austauscherrohre aus Rohrschalen gebildet werden. Bevor die Rohrschalen entlang ihrer Längskanten zu umfangsseitig geschlossenen Austauscherrohren verschweißt werden, kann dadurch mittels Schmelzschweißstrahlen (Laserstrahlen oder Elektronenstrahlen) von den Innenseiten der Rohrflanken her eine einwandfreie Verbindung zwischen den Scheitelbereichen der Rippenbänder und den Rohrflanken erzeugt werden.

Dazu wird jedes Rippenband zunächst mit der Außenseite einer Rohrschale über die Scheitelbereiche in Kontakt gebracht. Anschließend wird das Rippenband gemeinsam mit der Rohrschale mit identischer Geschwindigkeit in Längsrichtung der Rohrschale verlagert und durch einen schräg zur Vorschubrichtung der Rohrschale und des Rippenbands über die gesamte Rohrflankenbreite hin- und hergeführten Schmelzschweißstrahl von der Innenseite der Rohrschale aus miteinander verbunden. Nunmehr wird die derart berippte Rohrschale um 180° gedreht und es werden die freien Scheitelbereiche des Rippenbands mit der Außenseite einer weiteren Rohrschale in Kontakt gebracht. Dann werden die berippte Rohrschale und die weitere Rohrschale gemeinsam mit identischer Geschwindigkeit längsverlagert und die freien Scheitelbereiche des Rippenbands ebenfalls durch einen schräg zur Vorschubrichtung der Rohrschalen über die gesamte Rohrflankenbreite der weiteren Rohrschale hin- und hergeführten Schmelzschweißstrahl von der Innenseite der weiteren Rohrschale aus mit dieser verbunden.

Durch Verschweißung der Längskanten von berippten Rohrschalen wird dann ein Wärmeaustauscher letztlich komplettiert.

Die Erfindung ist nachfolgend anhand eines in den Zeichnungen dargestellten Ausführungsbeispiels näher erläutert. Es zeigen:
- Figur 1: im Schema einen Wärmeaustauscher in der Perspektive;
- Figur 2: in vergrößerter Darstellung im horizontalen Querschnitt gemäß der Linie II-II der Figur 1 die Festlegung eines Rohrendes in einem Rohrboden;
- Figur 3: in der Perspektive das Zusammenfügen von Rohrschalen und Rippen und
- Figur 4: in vergrößerter Darstellung einen Ausschnitt aus dem Wärmeaustauscher der Figur 1 in der Perspektive.

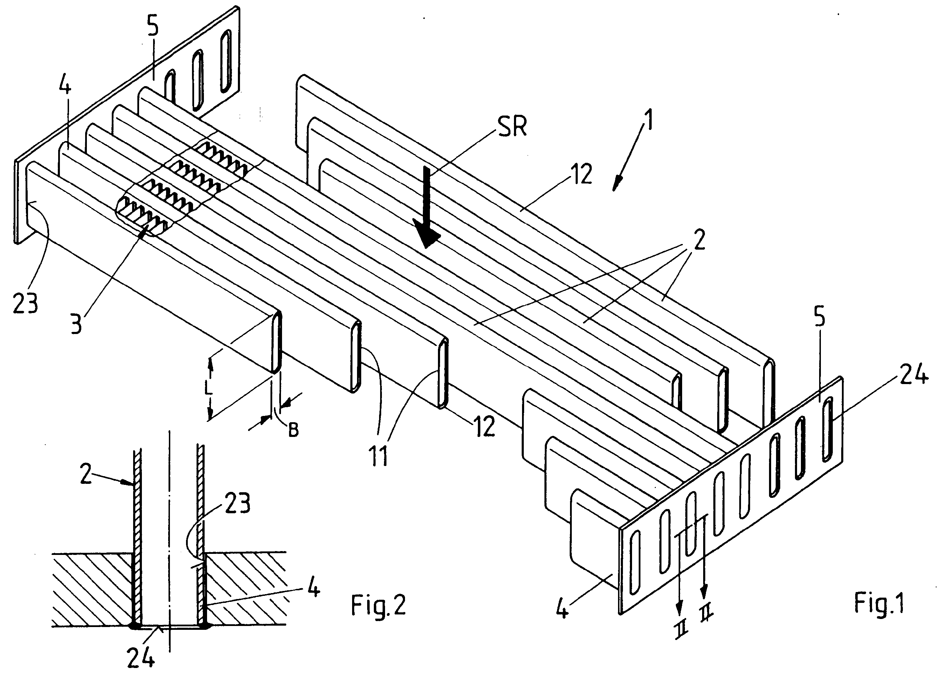

In der Figur 1 ist mit 1 ein Wärmeaustauscher bezeichnet, der sich aus insgesamt acht in Reihe nebeneinander angeordneten Austauscherrohren 2 mit zwischen die Austauscherrohre 2 eingegliederten Rippen 3 sowie aus die Rohrenden 4 aufnehmenden Rohrböden 5 als zumindest mittelbare Bestandteile von nicht näher dargestellten Verteil- bzw. Sammelkammern zusammensetzt. Es handelt sich bei den Austauscherrohren 2 um solche, die in Strömungsrichtung SR des äußeren Tauschermediums einen schlanken Querschnitt besitzen, wobei die Länge L - gleich der Rohrflankenbreite - (bis auf die gerundeten Stirnabschnitte 12) ein Mehrfaches der Breite B eines Austauscherrohrs 2 beträgt.

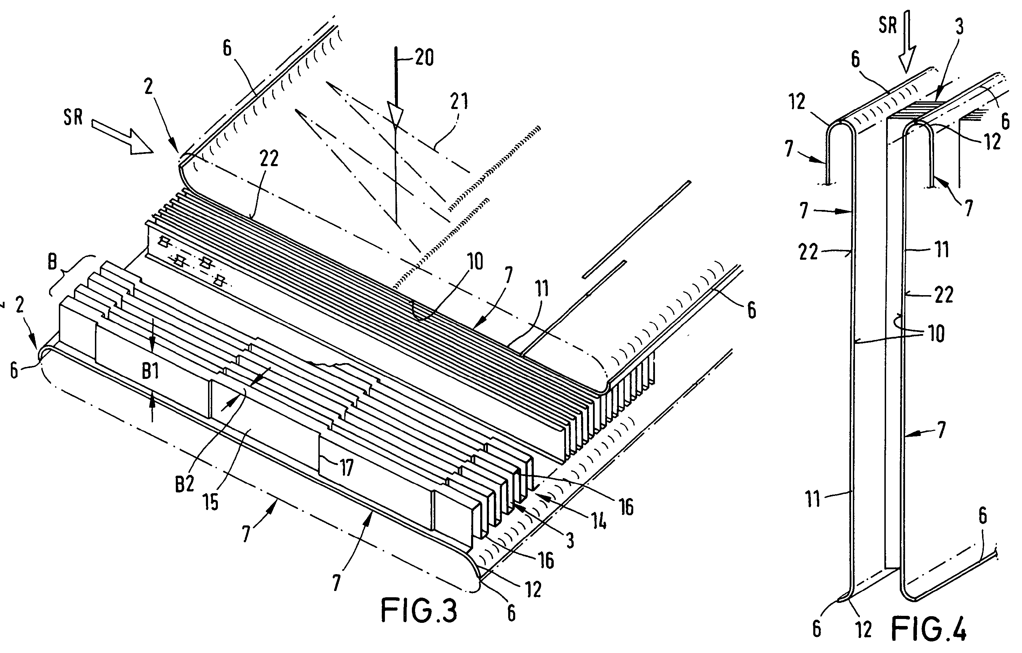

Die Austauscherrohre 2 sind aus über ihre Längskanten 6 miteinander verschweißten Rohrschalen 7 gebildet, wie dies aus den Figuren 3 und 4 hervorgeht.

Die zwei Austauscherrohre 2 verbindenden Rippen 3 bilden, wie der Bereich B der Figur 3 erkennen läßt, Bestandteil eines mäanderförmig abgewinkelten Rippenbands 14. Bei diesem Rippenband 14 ist die Breite B1 der den Abstand zweier Austauscherrorhe 2 bestimmenden Distanzabschnitte 15 größer als die Breite B2 der an den Außenseiten 10 der Rohrflanken 11 flächig zur Anlage kommenden Kontaktabschnitte 16 bemessen. Außerdem ist zu erkennen, daß im Längsverlauf eines jeden Distanzabschnitts 15 mehrere quer gerichtete Ausprägungen 17 vorgesehen sind. Durch die Ausprägungen werden somit zueinander versetzte Distanzabschnitte 15 und Kontaktabschnitte 16 gebildet, welche der Erzeugung von einen verbesserten Wärmeübergang gewährleistenden Turbulenzen dienen. Von den Kontaktabschnitten 16 kommt einer an der einen Rohrschale 7 und der andere an der benachbarten Rohrschale 7 zur Anlage.

Die Befestigung der Rippen 3 an den Außenseiten 10 der Rohrflanken 11 besteht darin, daß ein Schmelzschweißstrahl 20, z.B. ein Laserstrahl, so gemäß der strichpunktierten Linienführung 21 der Figur 3 im Zick-Zack über die Innenseiten 22 der Rohrflanken 11 geführt wird, daß die Kontaktabschnitte 16 einwandfrei mit den Rohrschalen 7 verbunden werden.

Wie die Figuren 1 und 2 zu erkennen geben, sind die Rohrenden 4 in die an den Querschnitt der Austauscherrohre 2 angepaßten Aussparungen 23 in den Rohrböden 5 eingesetzt und im Bereich ihrer Stirnflächen 24 mit den Rohrböden 5 verschweißt. Das Verschweißen kann mit herkömmlichen Schweißverfahren, aber auch mit Schmelzschweißstrahlen durchgeführt werden.

### Bezugszeichenaufstellung

- 1: - Wärmeaustauscher
- 2: - Austauscherrohre
- 3: - Rippen
3a - Rippen
3b - Rippen
- 4: - Rohrenden
- 5: - Rohrböden
- 6: - Längskanten v. 7
- 7: - Rohrschalen
- 8: - Rippenstege
- 9: - Rippenfüße
- 10: - Außenseiten v. 7
- 11: - Rohrflanken
- 12: - Stirnabschnitte v. 2
- 13: - Abstandshalter
- 14: - Rippenband
- 15: - Distanzabschnitte
- 16: - Kontaktabschnitte
- 17: - Abkantungen
- 18: - Längsschlitze
- 19: - Schweißnähte
- 20: - Schmelzschweißstrahl
- 21: - Linienführung
- 22: - Innenseiten v. 11
- 23: - Aussparungen in 5
- 24: - Stirnflächen v. 2

- A -: Rippenbereich
- B -: Rippenbereich
- B -: Breite v. 2
- B1 -: Breite v. 15
- B2 -: Breite v. 16
- L -: Länge v. 2
- SR -: Strömungsrichtung

## Patentansprüche

1. Wärmeaustauscher mit berippten Austauscherrohren (2) aus Stahl, welche in einer quer zur Strömungsrichtung (SR) des äußeren Tauschermediums sich erstreckenden Reihe parallel nebeneinander angeordnet sind und einen in Strömungsrichtung (SR) des äußeren Tauschermediums langgestreckten Querschnitt besitzen, dessen Länge (L) um ein Mehrfaches größer als seine Breite (B) bemessen ist, wobei die Enden (4) der über an ihren Rohrflanken (11) befestigte wellenförmige Rippenbänder (14) aus Stahl mit dem jeweils benachbarten Austauscherrohr (2) verbundenen Austauscherrohre (2) in an ihren Querschnitt angepaßte Aussparungen (23) in den stählernen Rohrböden (5) eingefügt und im Bereich ihrer Stirnflächen (24) mit den Rohrböden (5) verschweißt sind, **dadurch gekennzeichnet**, daß die Austauscherrohre (2) aus mit ihren Längskanten (6) aneinander geschweißten Rohrschalen (7) gebildet und die Rippenbänder (14) an ihren scheitelseitigen Kontaktabschnitten (16) durch mindestens einen auf die Innenseiten (22) der Rohrschalen (7) gerichteten Schmelzschweißstrahl (20) mit den Rohrschalen (7) verschweißt sind.

## Claims

1. A heat exchanger with finned exchanger tubes (2) of steel disposed parallel to one another in a row extending transversely relative to the direction of flow (SR) of the outer heat-exchange medium, the tubes having an elongate cross-section in the flow direction (SR) of the outer exchange medium, the length (L) of the cross-section being a number of times greater than its width (B), the ends (4) of the heat-exchanger tubes (2), which are connected to the respective adjacent heat-exchanger tubes (2) via corrugated steel fin strips (14) secured to the tube flanks (11), being inserted into recesses (23) adapted to their cross-section in the steel tube plates (5) to which the end surfaces (24) of the tubes are welded, characterised in that the heat-exchanger tubes (2) are made up of half-tubes (7) welded together along their longitudinal edges (6), and the apical contact portions (16) of the fin strips (14) are welded to the half-tubes (7) by at least one fusion-welding jet (20) directed towards the insides (22) of the half-tubes (7).

## Revendications

1. Echangeur de chaleur comportant des tubes d'échangeur nervurés (2) en acier, disposés côte à côte parallèlement dans une rangée s'étendant transversalement par rapport à la direction d'écoulement (SR) du fluide d'échange extérieur et dont la coupe transversale s'étend longitudinalement dans la direction d'écoulement (SR) du fluide d'échangeur extérieur, coupe transversale dont la longueur (L) est dimensionnée de façon à être supérieure d'un multiple à sa largeur (B), les extrémités (4) des bandes de nervures (14) ondulées fixées sur leurs flancs tubulaires (11) en acier comportant des tubes d'échange (2) liés aux tubes d'échange (2) respectivement limitrophes dans des évidements (23) adaptés à leurs sections transversales dans les fonds de tubes en acier (5) et sont soudés dans la zone de leurs faces avant (24) aux fonds de tubes (5), caractérisé en ce que les tubes d'échangeur (2) sont formés à partir de coques tubulaires (7) soudées entre elles sur leurs bords longitudinaux (6) et les bandes de nervures (14) sur le sommet de leurs sections de contact (16) sont soudées avec les coques tubulaires (7) par au moins un jet de soudure par fusion (20) dirigé sur les côtés internes (22) des coques tubulaires (7).
